# EUROPEAN PATENT APPLICATION

(11) **EP 4 382 494 A1**
(43) Date of publication of application: **12.06.2024**
(21) Application number: 22852869.1
(22) Date of filing: 22.07.2022
(51) Int. Cl.: C02F 11/00, C02F 11/06, C02F 11/18

(54) **DIGESTION SYSTEM AND HEATING CONTROL METHOD**

(30) Priority: 05.08.2021 JP 2021129142
(71) Applicant: Metawater Co., Ltd., Tokyo 101-0041 (JP)
(72) Inventor: FUJIWARA, Masato, Tokyo 101-0041 (JP); OMOTE, Takashi, Tokyo 101-0041 (JP)
(74) Representative: FDST Patentanwälte
(86) International application number: PCT/JP2022/028474
(87) International publication number: WO 2023/013445

(57) **Abstract**

A digestion system includes: a digestion tank that digests organic matter in excess sludge by anaerobic bacteria; a first piping that supplies the excess sludge to the digestion tank; a second piping that has a larger pipe diameter than a pipe diameter of the first piping; a first reservoir tank that communicates with each of the first piping and the second piping, and that stores excess sludge transported by the second piping; a transporting unit that transports the excess sludge stored in the first reservoir tank to the digestion tank via the first piping, continuously for a predetermined period; and a heater that heats the excess sludge in the first piping by a fluid.

## Description

### TECHNICAL FIELD

The present invention relates to a digestion system and a heating control method.

### BACKGROUND ART

Technology for supplying heated sludge to a digestion tank in a digestion system for anaerobic digestion of organic matter contained in sludge, in order to realize efficient digestion, has been proposed (see Patent Literature 1).

### CITATION LIST

### PATENT LITERATURE

Patent Literature 1: Japanese Translation of PCT Application No. 2011-516246

### SUMMARY OF INVENTION

### PROBLEMS TO BE SOLVED BY THE INVENTION

There is demand for suppressing energy necessary for digestion of sludge in the digestion system such as described above.

### MEANS FOR SOLVING THE PROBLEMS

According to an aspect of the embodiments, a digestion system includes: a digestion tank that digests organic matter in excess sludge by anaerobic bacteria, a first piping that supplies the excess sludge to the digestion tank, a second piping that has a larger pipe diameter than a pipe diameter of the first piping, a first reservoir tank that communicates with each of the first piping and the second piping, and that stores excess sludge transported by the second piping, a transporting unit that transports the excess sludge stored in the first reservoir tank to the digestion tank via the first piping, continuously for a predetermined period; and a heater that heats the excess sludge in the first piping by a fluid.

### ADVANTAGEOUS EFFECTS OF THE INVENTION

According to an aspect, energy necessary for digestion of sludge can be suppressed.

### BRIEF DESCRIPTION OF DRAWINGS

Fig. 1 is a diagram for describing a configuration of the sludge treatment facility 1 in which the digestion system 100 according to the first embodiment is applied.
Fig. 2 and Fig. 3 are diagrams for describing transportation of excess sludge.
Fig. 4 is a diagram for describing a configuration of the digestion system 200 according to the second embodiment.
Fig. 5 is a diagram for describing a configuration of the digestion system 300 according to the third embodiment.
Fig. 6 is a diagram for describing a configuration of the digestion system 400 according to the fourth embodiment.
Fig. 7 is a diagram for describing a configuration of the incineration system 90.
Fig. 8 is a diagram for describing a configuration of the digestion system 500 according to the fifth embodiment.
Fig. 9 to Fig. 12 are perspective diagrams for describing the configuration of the reservoir tank 71 and the preheater 73.
Fig. 13 is a perspective diagram for describing the configuration of the reservoir tank 71 and the preheater 73.
Fig. 14 is a diagram for describing a configuration of the digestion system 600 according to the sixth embodiment.

### DESCRIPTION OF EMBODIMENTS

Embodiments of the present invention will be described below with reference to the drawings. It should be noted, however, that these embodiments do not limit the technical scope of the present invention.

### [Digestion System 100 According to First Embodiment]

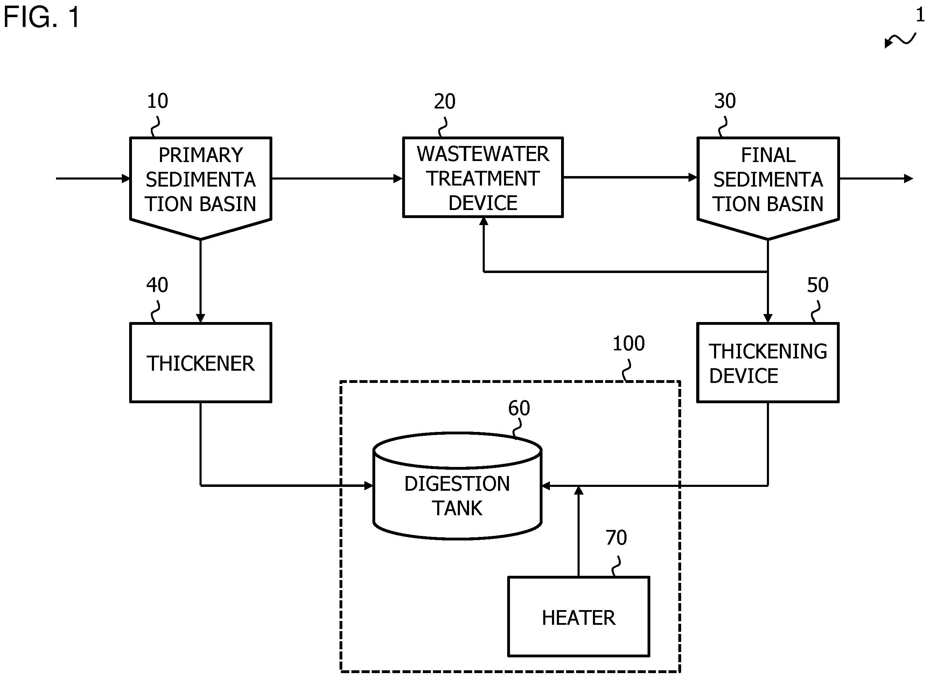

First, description will be made regarding a sludge treatment facility 1 in which a digestion system 100 according to a first embodiment is applied. Fig. 1 is a diagram for describing a configuration of the sludge treatment facility 1 in which the digestion system 100 according to the first embodiment is applied.

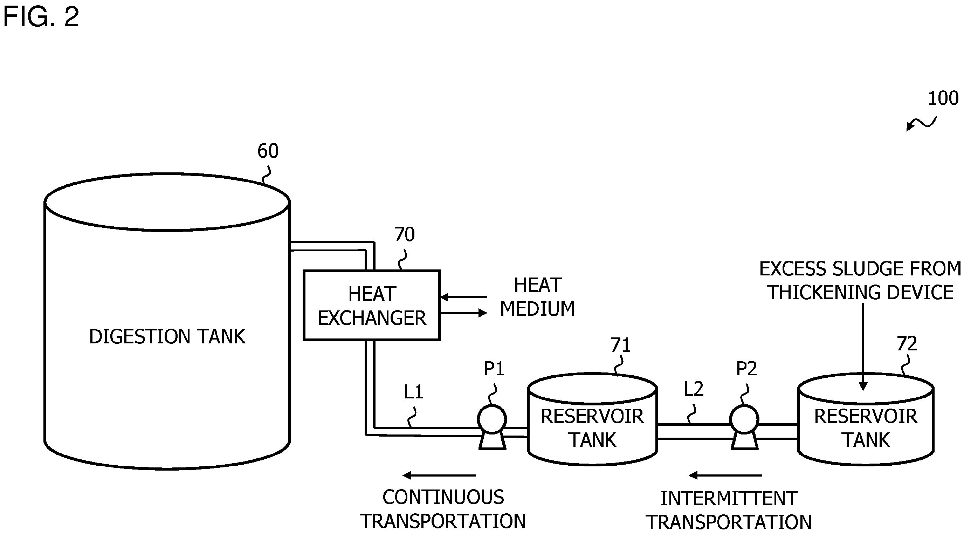

As illustrated in Fig. 1, the sludge treatment facility 1 according to the present embodiment has, for example, a primary sedimentation basin 10, a wastewater treatment device 20, a final sedimentation basin 30, a thickener 40, a thickening device 50, a digestion tank 60, and a heater 70. Hereinafter, a system that has the digestion tank 60 and the heater 70 will also be collectively referred to as digestion system 100. The digestion system 100 will be described in detail by way of Fig. 2.

The primary sedimentation basin 10 performs sedimentation and separation of organic matter and suspended matter contained in sewage and the like (hereinafter also referred to as water to be treated). The primary sedimentation basin 10 then discharges the separated organic matter and suspended matter to the thickener 40 as primary sludge, and also discharges the water to be treated, from which the organic matter and suspended matter have been separated, to the wastewater treatment device 20.

The wastewater treatment device 20 performs treatment of the water to be treated, by biological treatment such as standard activated sludge process, loop nitrification-denitrification, or the like. Specifically, the wastewater treatment device 20 has, for example, a denitrification tank (omitted from illustration) that generates nitrogen (performs denitrification) from nitrate ions by anaerobic denitrifying bacteria, and a nitrification tank (omitted from illustration) that is provided downstream from the denitrification tank and that performs nitrification of ammoniac nitrogen by aerobic nitrifying bacteria. The wastewater treatment device 20 then discharges the water to be treated to the final sedimentation basin 30.

The final sedimentation basin 30 performs separation by sedimentation of sludge contained in the water to be treated that is discharged from the wastewater treatment device 20, and discharges the separated sludge as activated sludge. The final sedimentation basin 30 then supplies part of the activated sludge to the thickening device 50 as excess sludge, and also returns the activated sludge other than the excess sludge to the wastewater treatment device 20 as returned sludge. The final sedimentation basin 30 also discharges the water to be treated, from which the sludge has been separated (supernatant liquid), to a sterilization treatment device (omitted from illustration) that is downstream. Thereafter, the sterilization treatment device (omitted from illustration) performs sterilization of the water to be treated that is discharged from the final sedimentation basin 30, and releases the sterilized treated water as effluent, for example.

The thickener 40 thickens the primary sludge discharged from the primary sedimentation basin 10, for example, and performs supply thereof to the digestion tank 60. Hereinafter, the primary sludge that is thickened in the thickener 40 will also be referred to as thickened primary sludge.

The thickening device 50 thickens the excess sludge discharged from the final sedimentation basin 30, for example, and performs supply thereof to the digestion tank 60. Hereinafter, the excess sludge that is thickened in the thickening device 50 will also be referred to as thickened excess sludge.

The digestion system 100 has the digestion tank 60, the heater 70, and other facilities. The digestion tank 60 is a tank that pools anaerobic bacteria, sludge, and so forth. The anaerobic bacteria in the digestion tank 60 perform anaerobic digestion (decomposition) of organic matter in sludge including the primary sludge supplied from the thickener 40 and the excess sludge supplied from the thickening device 50 (hereinafter also referred to simply as sludge) by biological reaction, thereby generating digested sludge. The anaerobic bacteria in the digestion tank 60 generates digestion gas such as methane gas or the like (hereinafter also referred to simply as digestion gas) in the process of digestion. Note that in order to efficiently advance biological reaction and improve digestion rate, the temperature of the digested sludge (digested liquid) in the digestion tank 60 is preferably maintained between 30°C to 40°C, or between 50°C to 60°C, for example (hereinafter, temperature of this range will also be referred to as optimal temperature).

The heater 70 heats the excess sludge prior to being supplied to the digestion tank 60. Specifically, the heater 70 is a heat exchanger that performs heating (raises the temperature) of the excess sludge prior to being supplied to the digestion tank 60 by potential heat of a heat medium (a fluid such as water, heat medium oil, or the like), for example. Also, the heater 70 is a steam heater that supplies steam (water vapor) to the excess sludge prior to being supplied to the digestion tank 60 so as to perform heating thereof, for example. The digestion tank 60 then maintains the temperature of the digested sludge in the digestion tank 60 at the optimal temperature, using the excess sludge heated by the heater 70 (e.g., excess sludge heated to 70°C to 95°C) as the heat medium.

Next, the reason why the excess sludge is heated will be described. One reason of deterioration in digestion rate in the digestion tank 60 is the presence of a massive bacterial community surviving in the excess sludge. In a case of supplying the excess sludge containing the surviving bacterial community, as it is, to the digestion tank 60, the anaerobic bacterial in the digestion tank 60 may not be able to sufficiently decompose (digest) the bacterial community.

Thus, the excess sludge is thoroughly heated at the stage prior to supplying the excess sludge to the digestion tank 60 in the digestion system 100 according to the present embodiment, thereby destroying the bacterial community surviving in the excess sludge to a sufficient level. The digestion system 100 then maintains the optimal temperature in the digested sludge in the digestion tank 60 by using the heated excess sludge as the heat medium.

This enables the digestion system 100 according to the present embodiment to suppress deterioration in the digestion rate in the digestion tank 60.

Note that the primary sludge is in an easily-decomposed state due to the proportion of the bacterial community being low, and accordingly an arrangement may be made in the digestion system 100 in which heating of the primary sludge is not performed prior to supply to the digestion tank 60, in order to raise digestion efficiency and also realize energy conservation. Alternatively, in a case in which the primary sludge is used as the heat medium as well, heating of the primary sludge may be performed prior to supply to the digestion tank 60. Transportation of excess sludge in the digestion system 100 will be described below.

### [Transportation of Excess Sludge]

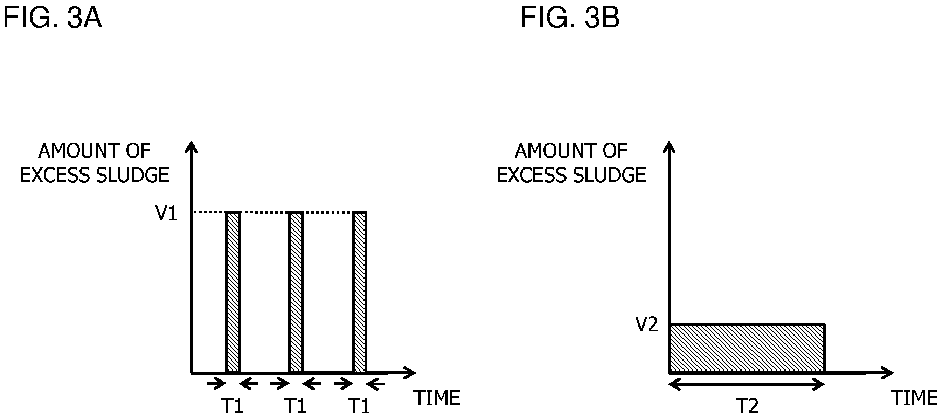

Fig. 2 and Fig. 3 are diagrams for describing transportation of excess sludge. Specifically, Fig. 2 is a diagram for schematically describing a state in which excess sludge is intermittently and continuously transported. A case in which the heater 70 is a heat exchanger (hereinafter also referred to as heat exchanger 70) will be described below.

The digestion system 100 according to the present embodiment has, for example, a reservoir tank 71 (hereinafter also referred to as first reservoir tank 71 or buffer tank 71), and a reservoir tank 72 (hereinafter also referred to as second reservoir tank 72 or buffer tank 72).

The reservoir tank 72 communicates with piping (omitted from illustration) that communicates with the thickening device 50, and temporarily stores excess sludge that is intermittently transported from the thickening device 50.

The reservoir tank 71 communicates with piping L2 (hereinafter also referred to as second piping L2) that communicates with the reservoir tank 72, temporarily stores excess sludge that is intermittently transported from the reservoir tank 72. The reservoir tank 71 also communicates with piping L1 (hereinafter also referred to as first piping L1) that communicates with the digestion tank 60.

Further, the digestion system 100 has, as transporting means for transporting the excess sludge (hereinafter also referred to simply as transporting means) a pump P1 (hereinafter also referred to as first pump P1) that is installed between the digestion tank 60 and the reservoir tank 71, and a pump P2 (hereinafter also referred to as second pump P2) that is installed between the reservoir tank 71 and the reservoir tank 72. Note that the number of transporting means installed in the digestion system 100, and positions of installation, may be other than the above.

Specifically, the pump P2 intermittently transports the excess sludge transported from the thickening device 50 to the reservoir tank 72 (excess sludge stored in the reservoir tank 72) from the reservoir tank 72 to the reservoir tank 71 via the piping L2, as illustrated in Fig. 2. The pump P2 then stores the excess sludge intermittently transported through the piping L2 in the reservoir tank 71. Thereafter, in the piping L1, the pump P1 continuously transports the excess sludge stored in the reservoir tank 71 from the reservoir tank 71 through the heat exchanger 70 to the digestion tank 60, via the piping L1. That is to say, in the piping L1, the pump P2 continuously transports and supplies the excess sludge to the heat exchanger 70.

Next, intermittent transportation of excess sludge (hereinafter also referred to as intermittent transportation) and continuous transportation of excess sludge (hereinafter also referred to as continuous transportation) will be described with reference to Fig. 3(A) and Fig. 3(B). Note that in Fig. 3(A) and Fig. 3(B), regions indicated by hatching schematically indicate the amount of excess sludge, each schematically illustrating a state in which the same amount of excess sludge is transported. Specifically, Fig. 3(A) is a graph for describing intermittent transportation of excess sludge. The vertical axis represents the amount of excess sludge that is transported, and the horizontal axis represents time. Also, Fig. 3(B) is a graph for describing continuous transportation of excess sludge. The vertical axis represents the amount of excess sludge that is transported, and the horizontal axis represents time.

The piping L1 and the piping L2 are piping of which the pipe diameter is different from each other, for example, as illustrated in Fig. 2. Specifically, the pipe diameter of the piping L2 is, for example, 150 (mm) or more, which is larger than the pipe diameter of the piping L1. This numerical value of the pipe diameter of 150 (mm) or more is a numerical value that is determined in accordance with a design policy of sludge treatment equipment. Description will be made below assuming that the pipe diameter of the piping L2 is 150 (mm).

Now, excess sludge needs to be transported even in a case in which the amount of excess sludge produced is markedly greater than a normal production amount (so-called maximum load). Accordingly, intermittent transportation of the excess sludge is respectively performed, for example, from the thickening device 50 to the reservoir tank 72, and from the reservoir tank 72 to the reservoir tank 71, as illustrated in Fig. 2.

Also, in sludge treatment facilities in general, the amount of excess sludge produced is smaller as compared to the amount of excess sludge that can be transported by this pipe diameter. In a case in which sludge is not transported regarding a predetermined pipe diameter and volume flow rate or more, the sludge will settle on a lower portion of the piping, and as a result, the likelihood of the piping becoming obstructed by the sludge increases. Accordingly, intermittent transporting is performed such as described above.

Specifically, at the piping L2, intermittent transportation is performed in which excess sludge of a sludge amount V1 is transported all at once in a period T1, at certain intervals, as illustrated in Fig. 3(A), for example. Note that intermittent transportation means not only certain intervals, but transportation at indeterminate intervals as well.

Conversely, at the piping L1, continuous transportation is performed in which excess sludge of a sludge amount V2 is continuously transported in a period T2, as illustrated in Fig. 3(B), for example.

That is to say, in a case of heating (raising temperature) excess sludge of the sludge amount V2 that is smaller than the sludge amount V1 to a predetermined temperature by the heat exchanger 70 on the same time (e.g., period T1), the amount of thermal energy necessary for heating the excess sludge of the sludge amount V2 is smaller than the amount of thermal energy necessary for heating the excess sludge of the sludge amount V1. In other words, in order to heat the amount of excess sludge of the sludge amount V1 to the predetermined temperature all at once in the period T1, a greater amount of thermal energy is necessary as compared to a case of heating the excess sludge of the sludge amount V2 to the predetermined temperature all at once in the same period T1.

With respect to this point, a large-scale heater 70 becomes necessary, for example, in order to supply a great amount of thermal energy to the excess sludge. Specifically, in the case in which the heat exchanger 70 is the heat exchanger 70 illustrated in Fig. 2, the heat exchanger itself needs to be large-scale, in order to increase the heat transfer area thereof. However, making the heat exchanger 70 large-scale (increased heat transfer area) leads to increased installation space, installation costs, maintenance costs, fuel used, and so forth, and hence realization is difficult in some cases.

Accordingly, with the digestion system 100 according to the present embodiment, in order to suppress obstruction of the piping, and further to reduce the amount of excess sludge transmitted, continuous transportation of excess sludge is performed over a predetermined period. In order to realize continuous transportation, in the digestion system 100, the reservoir tank 71 that performs primary storage of the excess sludge is provided, and the pipe diameter of the piping L1 that connects the reservoir tank 71 and the digestion tank 60 is made to be smaller than the 150 (mm) described above. The pipe diameter of the piping L1 is set to, for example, 60 (mm), in order to prevent obstruction by sludge and to obtain a predetermined flow speed and volume flow rate or more.

Specifically, the excess sludge temporarily stored in the reservoir tank 71 is continuously transported by the pump P1 and transported through the piping L1, and further is supplied into the digestion tank 60 from an upper portion of the digestion tank 60. During the period in which this continuous transportation is performed (period T2), there is no period during which the excess sludge is not transported, unlike in the intermittent transportation described in Fig. 3(A), and accordingly the amount of the excess sludge being transported is smaller.

As described above, in the digestion system 100 according to the present embodiment, continuous transportation is performed for a small amount of excess sludge, and the excess sludge is heated during this transportation, and accordingly the amount of heat supplied to the excess sludge per unit time (e.g., period T1) can be reduced. As a result, in the digestion system 100, the heat exchanger 70 can be made to be smaller.

### [Digestion System 200 According to Second Embodiment]

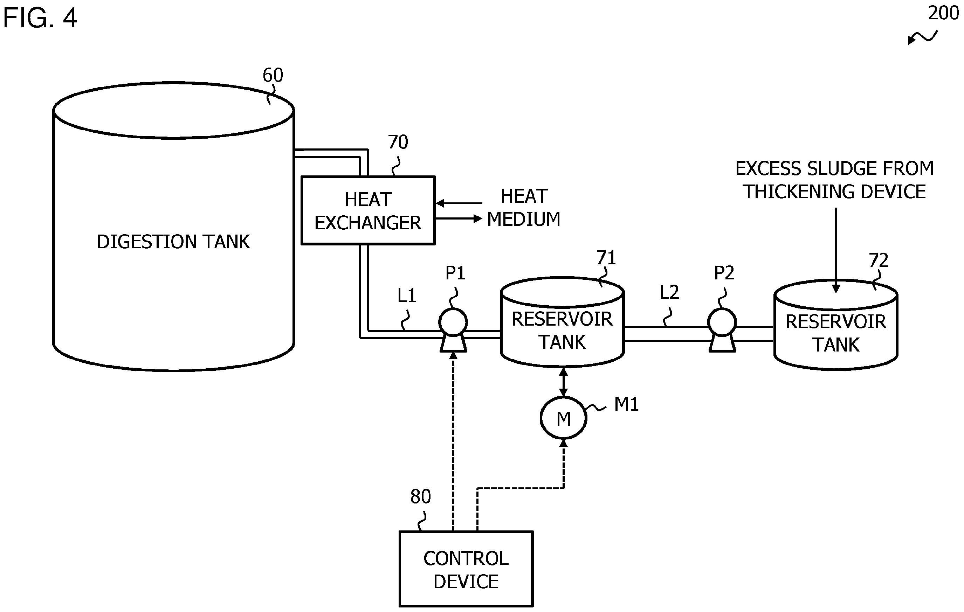

Next, a digestion system 200 according to a second embodiment will be described. Fig. 4 is a diagram for describing a configuration of the digestion system 200 according to the second embodiment.

The digestion system 200 according to the present embodiment has a control device 80 that controls the amount of excess sludge transported to the digestion tank 60, in addition to the configurations that the digestion system 100 according to the first embodiment has, for example, as illustrated in Fig. 4.

The control device 80 is, for example, a computer that has a CPU (Central Computing Unit) and memory and so forth. The control device 80 performs processing to control the transported amount of excess sludge by collaboration between a program stored in a storage device (omitted from illustration) and the CPU.

Specifically, the control device 80 controls the sludge amount V2 for performing continuous transportation from the reservoir tank 71 to the digestion tank 60, in accordance with the amount of excess sludge stored in the reservoir tank 71, for example.

More specifically, the control device 80 references a level gauge M1 that measures the level of the amount of excess sludge stored in the reservoir tank 71 (e.g., the height in the reservoir tank 71 of the excess sludge stored in the reservoir tank 71), for example, and acquires the current level.

In a case in which a value indicating the acquired level is greater than an upper-level threshold value that is set in advance, for example, the control device 80 performs control of the pump P1 so as to increase the sludge amount V2 for performing transport (continuous transport) from the reservoir tank 71 to the digestion tank 60.

That is to say, in a case in which there is a limit to the capacity of the reservoir tank 71, there is a need in the digestion system 200 to perform control such that the amount of excess sludge stored in the reservoir tank 71 does not excessively increase. Accordingly, in a case in which the level gauge M1 indicates that the amount of excess sludge stored in the reservoir tank 71 is greater than the upper-level threshold value, for example, the control device 80 performs control to increase the sludge amount V2 for transport from the reservoir tank 71 to the digestion tank 60, so that the amount of excess sludge stored in the reservoir tank 71 decreases.

Accordingly, the control device 80 can prevent occurrence of a situation in which new excess sludge cannot be stored in the reservoir tank 71, for example.

Note that in a case in which the value indicating the level that is acquired is smaller than a lower-limit threshold value that is set in advance (threshold value smaller than the upper-limit threshold value), for example, the control device 80 may perform control of the pump P1 so as to reduce the sludge amount V2 that is transported from the reservoir tank 71 to the digestion tank 60, within a range in which continuous transportation of excess sludge from the reservoir tank 71 to the digestion tank 60 can be maintained.

Also, in a case in which the value indicating the level that is acquired is no lower than the lower-level threshold value and no higher than the upper-limit threshold value, for example, the control device 80 may leave the sludge amount V2 for transport from the reservoir tank 71 to the digestion tank 60 unchanged.

### [Digestion System 300 According to Third Embodiment]

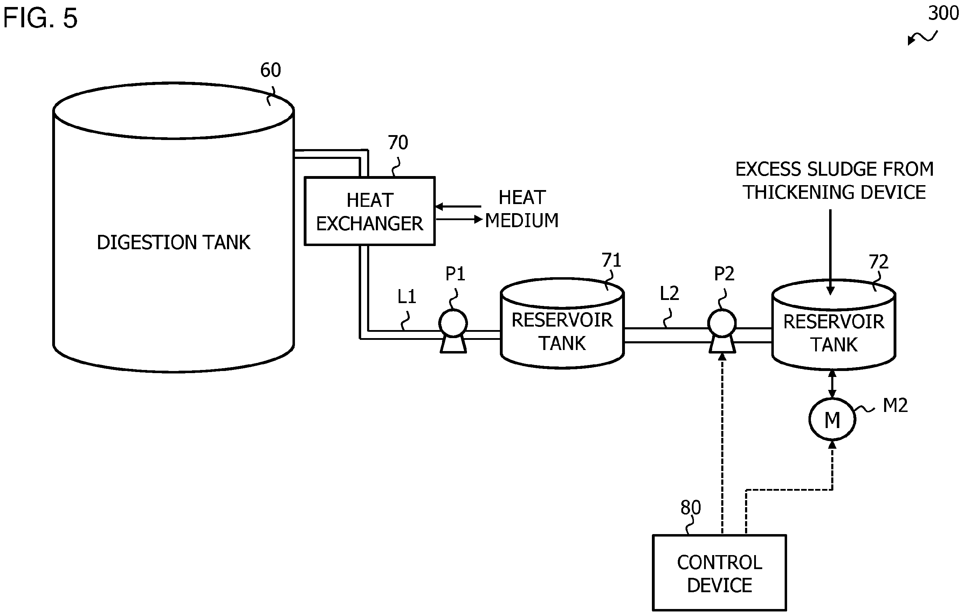

Next, a digestion system 300 according to a third embodiment will be described. Fig. 5 is a diagram for describing a configuration of the digestion system 300 according to the third embodiment. Although description will be made below in which the control device 80 in the third embodiment is the same as the control device 80 described in the second embodiment, the control device 80 in the third embodiment may be different from the control device 80 described in the second embodiment.

The digestion system 300 according to the present embodiment has a control device 80 that controls the amount of excess sludge transported to the digestion tank 60, in addition to the configurations that the digestion system 100 according to the first embodiment has, for example, as illustrated in Fig. 5.

Specifically, the control device 80 controls the indirect transportation performed from the reservoir tank 72 to the reservoir tank 71, in accordance with the amount of excess sludge stored in the reservoir tank 72, for example.

More specifically, the control device 80 references a level gauge M2 that measures the level of the amount of excess sludge stored in the reservoir tank 72 (e.g., the height in the reservoir tank 72 of the excess sludge stored in the reservoir tank 72), for example, and acquires the current level.

In a case in which a value indicating the acquired level is greater than a threshold value that is set in advance, for example, the control device 80 performs control of the pump P2 so as to perform transport (indirect transport) of excess sludge from the reservoir tank 72 to the reservoir tank 71.

That is to say, in a case in which there is a limit to the capacity of the reservoir tank 72, there is a need in the digestion system 300 to perform control such that the amount of excess sludge stored in the reservoir tank 72 does not excessively increase. Accordingly, in a case in which the level gauge M2 indicates that the amount of excess sludge stored in the reservoir tank 72 is greater than the threshold value, for example, the control device 80 performs control to transport the excess sludge from the reservoir tank 72 to the reservoir tank 71, so that the amount of excess sludge stored in the reservoir tank 72 decreases.

Accordingly, the control device 80 can prevent occurrence of a situation in which new excess sludge cannot be stored in the reservoir tank 72, for example.

Note that in a case in which the value indicating the level that is acquired is smaller than a threshold value that is set in advance, for example, the control device 80 may not perform transportation of the excess sludge from the reservoir tank 72 to the reservoir tank 71.

Also, the control device 80 may control the sludge amount V2 for continuous transport from the reservoir tank 71 to the digestion tank 60 in accordance with the amount of excess sludge stored in the reservoir tank 72, for example.

Also, the control device 80 may control the indirect transportation performed from the reservoir tank 72 to the reservoir tank 71 in accordance with the amount of excess sludge stored in the reservoir tank 72, and also may control the sludge amount V2 for performing continuous transportation from the reservoir tank 71 to the digestion tank 60 in accordance with the amount of excess sludge stored in the reservoir tank 71.

Also, the digestion system 300 may, in addition to the control device 80 that controls the indirect transportation performed from the reservoir tank 72 to the reservoir tank 71 in accordance with the amount of excess sludge stored in the reservoir tank 72, separately have another control device 80 that controls the sludge amount V2 for performing continuous transportation from the reservoir tank 71 to the digestion tank 60 in accordance with the amount of excess sludge stored in the reservoir tank 71 (i.e., the control device 80 described in Fig. 4).

### [Digestion System 400 According to Fourth Embodiment]

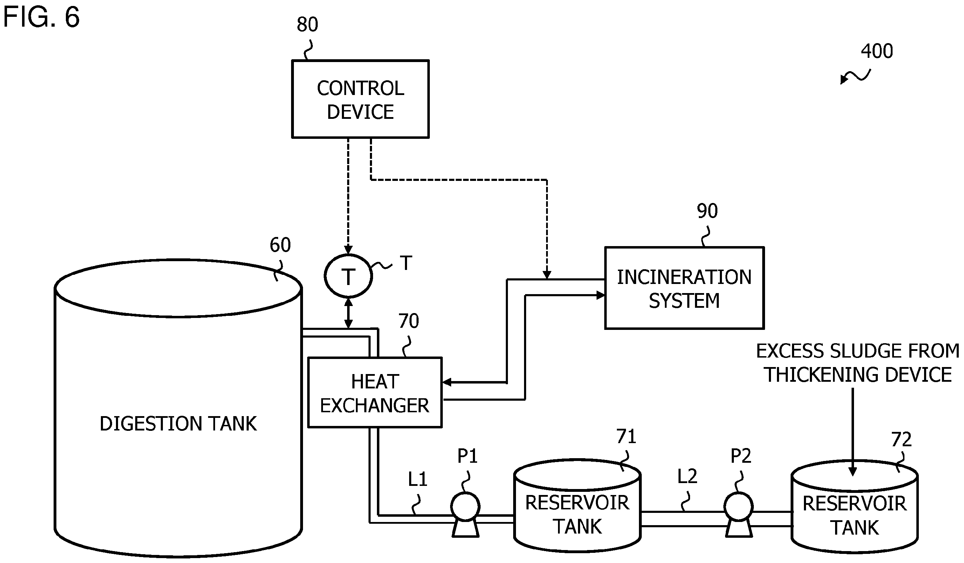

Next, a digestion system 400 according to a fourth embodiment will be described. Fig. 6 is a diagram for describing a configuration of the digestion system 400 according to the fourth embodiment. Although description will be made below in which the control device 80 in the fourth embodiment is the same as the control device 80 described in the second embodiment and the third embodiment, the control device 80 in the fourth embodiment may be different from the control device 80 described in the second embodiment and so forth.

The digestion system 400 according to the present embodiment has, for example, in addition to the configurations that the digestion system 100 according to the first embodiment has, the control device 80 that controls the amount of excess sludge transported to the digestion tank 60, and an incineration system 90 that performs incineration of excess sludge, as illustrated in Fig. 6. A specific example of the incineration system 90 will be described below.

### [Specific Example of Incineration System 90]

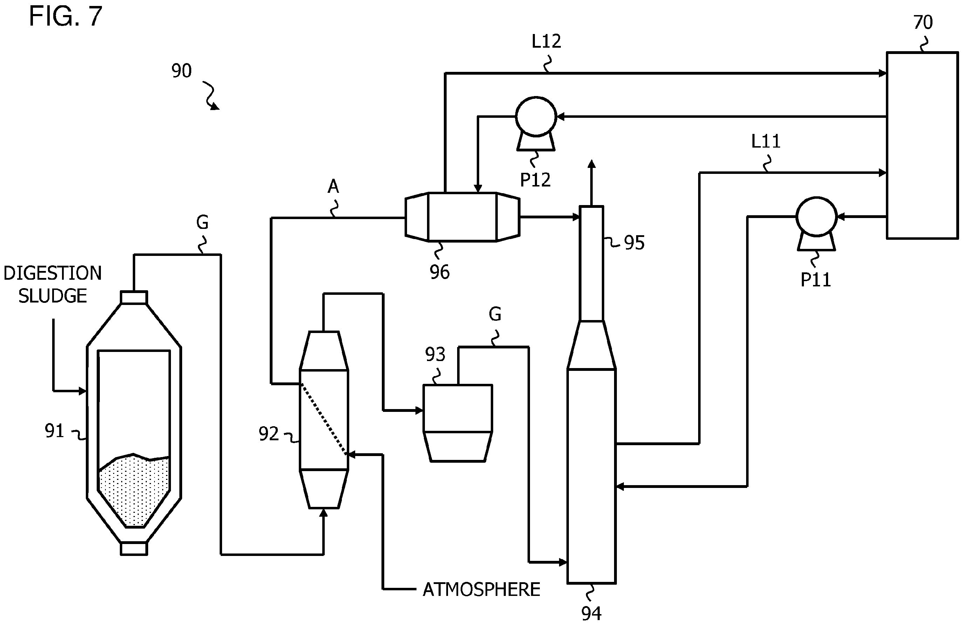

Fig. 7 is a diagram for describing a configuration of the incineration system 90. As illustrated in Fig. 7, the incineration system 90 has, for example, an incinerator 91, a white smoke prevention air preheater 92, a scrubber 93, a smoke treatment tower 94, a smokestack 95, and a hot water generator 96.

The incinerator 91 is a fluidized incinerator that incinerates digestion sludge following digestion being performed in the digestion tank 60, for example. Note that while a case will be described below in which incineration of digestion sludge is performed in the incinerator 91, the incinerator 91 may perform incineration of waste other than digestion sludge (e.g., general waste trash, industrial waste).

The white smoke prevention air preheater 92 is a heat exchanger for exhaust gas, and heats the atmosphere to generate white smoke prevention air A, using potential heat of high-temperature exhaust gas G discharged from the incinerator 91, for example. This white smoke prevention air A is heated air used to prevent water vapor contained in the exhaust gas G released from the smokestack 95 from appearing as if it were white smoke.

The scrubber 93 is installed downstream from the white smoke prevention air preheater 92, and removes impurities in the exhaust gas G output from the white smoke prevention air preheater 92.

The smoke treatment tower 94 takes in the exhaust gas G from a lower portion of the tower, and components such as SOₓ or the like contained in the exhaust gas G are removed by inclusion in smoke wash water, by bringing the exhaust gas G into contact with the smoke wash water that is sprinkled from a sprinkler nozzle (omitted from illustration) at an upper portion thereof.

A heat exchanger (omitted from illustration), which the smoke treatment tower 94 has, performs heat recovery from the smoke wash water discharged from the smoke treatment tower 94 (hereinafter also referred to as smoke wash wastewater). A heat medium (e.g., a fluid such as water, heat medium oil, or the like) that holds heat energy recovered by the heat exchanger, which the smoke treatment tower 94 has, is supplied to the heat exchanger 70 via piping L11 by a circulation pump P11, for example.

Also, the smokestack 95 is installed at an upper portion of the smoke treatment tower 94. The exhaust gas G cleansed in the smoke treatment tower 94 is subjected to white smoke prevention treatment in the smokestack 95, and thereafter is released from the smokestack 95 into the atmosphere.

The hot water generator 96 is a heat exchanger, and performs heat recovery from the white smoke prevention air A. A heat medium (e.g., a fluid such as water or heat medium oil) that holds heat energy of which heat recovery is performed by the hot water generator 96 is supplied to the heat exchanger 70 via piping L12 by a circulation pump P12, for example.

Thereafter, the heat exchanger 70 heats the excess sludge flowing through the piping L1 by the heat energy that the heat medium supplied from at least one of the piping L11 and the piping L12 holds, as illustrated in Fig. 6.

Accordingly, in the digestion system 400, at least part of the heat energy that the exhaust gas G discharged from the incinerator 91 has can be used at least as part of heat energy necessary to heat the excess sludge that is put into to the digestion tank 60.

Note that in the heat exchanger 70, the excess sludge flowing through the piping L1 may be heated by heat energy that wastewater discharged from the scrubber 93 (hereinafter may be referred to as scrubber wastewater) holds, for example.

Specifically, a heat exchanger (omitted from illustration) that the scrubber 93 has may, for example, perform heat recovery from the scrubber wastewater. A heat medium (e.g., a fluid such as water or heat medium oil) that holds the heat energy recovered by the heat exchanger that the scrubber 93 has may be supplied to the heat exchanger 70 by a circulation pump (omitted from illustration), for example.

Also, the digestion system 400 may have an electric power generating system (omitted from illustration) that generates electricity by performing incineration of digestion gas generated in conjunction with digestion of excess sludge in the digestion tank 60, for example. The heat exchanger 70 may heat the excess sludge flowing through the piping L1 by heat energy that exhaust gas discharged from the electric power generating system holds, for example.

Specifically, a heat exchanger (omitted from illustration) that the electric power generating system has may perform heat recovery from exhaust gas discharged from the electric power generating system in conjunction with generation of electricity by the electric power generating system, for example. A heat medium that holds the heat energy recovered by the heat exchanger that the electric power generating system has may be supplied to the heat exchanger 70 by a circulation pump (omitted from illustration), for example.

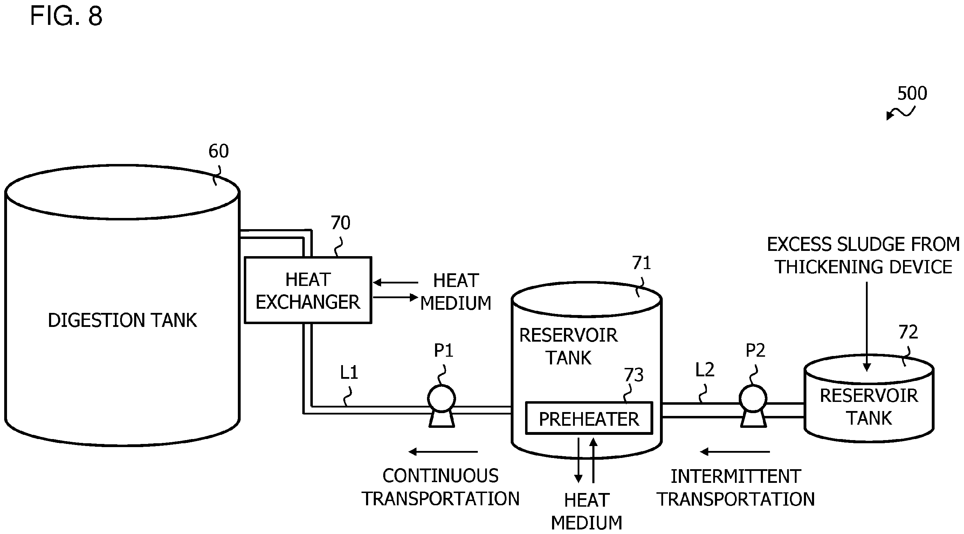

Note that the heat medium that holds the heat energy of which heat recovery from the incineration system 90 illustrated in Fig. 7 has been performed may be supplied not only to the digestion system 400 illustrated in Fig. 6, but to the heater 70 (e.g., heat exchanger 70) in the digestion systems of other embodiments (digestion systems 100, 200, 300, 500, and 600) as well. Also, in a case of a digestion system 500 illustrated in Fig. 8, the heat medium holding the heat energy of which heat recovery from the incineration system 90 illustrated in Fig. 7 has been performed may be supplied to a preheater 73.

Returning to Fig. 6, the control device 80 controls the amount of heat medium circulating between the heat exchanger 70 and the incineration system 90 in accordance with the temperature of the excess sludge following heating being performed by the heat exchanger 70, for example.

More specifically, the control device 80 acquires the temperature of the excess sludge following heating by the heat exchanger 70 being performed, by referencing a thermometer T that measures the temperature of the excess sludge following heating by the heat exchanger 70 being performed (excess sludge being transported between the heat exchanger 70 and the digestion tank 60), for example.

In a case in which the acquired temperature is higher than an upper-limit threshold value that is set in advance, for example, the control device 80 controls the pump P11 and the pump P12 so as to reduce the amount of heat medium circulating between the heat exchanger 70 and the incineration system 90, for example. Also, in a case in which the acquired temperature is lower than a lower-limit threshold value that is set in advance (a threshold value smaller than the upper-limit threshold value), for example, the control device 80 controls the pump P11 and the pump P12 so as to increase the amount of heat medium circulating between the heat exchanger 70 and the incineration system 90, for example.

Thus, the control device 80 can control the temperature of the excess sludge put into the digestion tank 60, for example, so that the temperature of the digestion sludge in the digestion tank 60 is an optimal temperature. Accordingly, the control device 80 can prevent deterioration in digestion performance in the digestion tank 60, for example.

Note that in a case in which the acquired temperature is no lower than the lower-limit threshold value and no higher than the upper-limit threshold value, for example, the control device 80 may not change the amount of heat medium circulating between the heat exchanger 70 and the incineration system 90.

Also, a case has been described in the above example in which the amount of heat medium circulating between the heat exchanger 70 and the incineration system 90 is controlled by using the temperature of the excess sludge following heating by the heat exchanger 70 being performed, but the control device 80 may, for example, control the amount of heat medium circulating between the heat exchanger 70 and the incineration system 90 by using the temperature of the excess sludge prior to heating by the heat exchanger 70 being performed. Specifically, the control device 80 may perform control of the amount of heat medium circulating between the heat exchanger 70 and the incineration system 90 by referencing a thermometer (omitted from illustration) that measures the temperature of the excess sludge prior to heating by the heat exchanger 70 being performed (excess sludge being transported between the reservoir tank 71 and the heat exchanger 70), for example. More specifically, in a case in which the temperature of the excess sludge measured by the thermometer (the temperature of the excess sludge prior to heating being performed by the heat exchanger 70) is higher than an upper-limit threshold value that is set in advance, for example, the control device 80 may perform control so as to reduce the amount of heat medium circulating between the heat exchanger 70 and the incineration system 90. Also, in a case in which the temperature of the excess sludge measured by the thermometer (the temperature of the excess sludge prior to heating being performed by the heat exchanger 70) is lower than a lower-limit threshold value that is set in advance, for example, the control device 80 may perform control so as to increase the amount of heat medium circulating between the heat exchanger 70 and the incineration system 90.

Note that in this case, the control device 80 may control the amount of heat medium circulating between the heat exchanger 70 and the incineration system 90 by using the difference between the temperature of the excess sludge prior to heating by the heat exchanger 70 and the temperature of the excess sludge following heating by the heat exchanger 70, for example.

Also, the control device 80 may control the amount of heat medium circulating between the heat exchanger 70 and the incineration system 90 by using the sludge amount V2 being transported from the reservoir tank 71 to the heat exchanger 70, for example. Specifically, the control device 80 may perform control of the amount of heat medium circulating between the heat exchanger 70 and the incineration system 90 by referencing a flowmeter (omitted from illustration) that measures the sludge amount V2 being transported from the reservoir tank 71 to the heat exchanger 70, for example. More specifically, in a case in which the sludge amount V2 measured by the flowmeter is greater than an upper-limit threshold value that is set in advance, for example, the control device 80 may perform control so as to increase the amount of heat medium circulating between the heat exchanger 70 and the incineration system 90. Also, in a case in which the sludge amount V2 measured by the flowmeter is smaller than a lower-limit threshold value that is set in advance, for example, the control device 80 may perform control so as to reduce the amount of heat medium circulating between the heat exchanger 70 and the incineration system 90.

Also, the control device 80 may control the amount of heat medium circulating between the heat exchanger 70 and the incineration system 90 by using the temperature of the heat medium prior to being supplied to the heat exchanger 70, for example. Specifically, the control device 80 may, for example, perform control of the amount of heat medium circulating between the heat exchanger 70 and the incineration system 90 by referencing a thermometer (omitted from illustration) that measures the temperature of the heat medium prior to being supplied to the heat exchanger 70. More specifically, in a case in which the temperature of the heat medium measured by the thermometer (the temperature of the heat medium prior to being supplied to the heat exchanger 70) is higher than an upper-limit threshold value that is set in advance, for example, the control device 80 may perform control so as to reduce the amount of heat medium circulating between the heat exchanger 70 and the incineration system 90. Also, in a case in which the temperature of the heat medium measured by the thermometer (the temperature of the heat medium prior to being supplied to the heat exchanger 70) is lower than a lower-limit threshold value that is set in advance, for example, the control device 80 may perform control so as to increase the amount of heat medium circulating between the heat exchanger 70 and the incineration system 90.

Also, the control device 80 may control the amount of heat medium circulating between the heat exchanger 70 and the incineration system 90 by using the temperature of the heat medium following being discharged from the heat exchanger 70, for example. Specifically, the control device 80 may, for example, perform control of the amount of heat medium circulating between the heat exchanger 70 and the incineration system 90 by referencing a thermometer (omitted from illustration) that measures the temperature of the heat medium following being discharged from the heat exchanger 70. More specifically, in a case in which the temperature of the heat medium measured by the thermometer (the temperature of the heat medium following being supplied to the heat exchanger 70) is higher than an upper-limit threshold value that is set in advance, for example, the control device 80 may perform control so as to reduce the amount of heat medium circulating between the heat exchanger 70 and the incineration system 90. Also, in a case in which the temperature of the heat medium measured by the thermometer (the temperature of the heat medium following being supplied to the heat exchanger 70) is lower than a lower-limit threshold value that is set in advance, for example, the control device 80 may perform control so as to increase the amount of heat medium circulating between the heat exchanger 70 and the incineration system 90.

Note that the control device 80 may perform control of the amount of heat medium circulating between the heat exchanger 70 and the incineration system 90 in accordance with the temperature of the excess sludge following heating by the heat exchanger 70 being performed, as well as performing at least one of control of indirect transportation from the reservoir tank 72 to the reservoir tank 71 in accordance with the amount of excess sludge stored in the reservoir tank 72, and control of the sludge amount V2 regarding which continuous transportation is performed from the reservoir tank 71 to the digestion tank 60, in accordance with the amount of excess sludge stored in the reservoir tank 71.

Also, the digestion system 400 may have, in addition to the control device 80 that controls indirect transportation that is performed from the reservoir tank 72 to the reservoir tank 71 in accordance with the amount of excess sludge stored in the reservoir tank 72, at least one of another control device 80 that controls indirect transportation that is performed from the reservoir tank 72 to the reservoir tank 71 in accordance with the amount of excess sludge stored in the reservoir tank 72, and another control device 80 that controls the sludge amount V2 regarding which continuous transportation is performed from the reservoir tank 71 to the digestion tank 60, in accordance with the amount of excess sludge stored in the reservoir tank 71.

### [Digestion System 500 According to Fifth Embodiment]

Next, a digestion system 500 according to a fifth embodiment will be described. Fig. 8 is a diagram for describing a configuration of the digestion system 500 according to the fifth embodiment.

The digestion system 500 according to the present embodiment has the configurations that the digestion system 100 according to the first embodiment has, for example, as illustrated in Fig. 8. The reservoir tank 71 according to the present embodiment further has, as illustrated in Fig. 8, the preheater 73 for heating the excess sludge transported from the reservoir tank 72, for example.

The preheater 73 is, for example, a heat exchanger that heats (raises the temperature of) the excess sludge prior to being transported to the heat exchanger 70, by potential heat that a heat medium (a fluid such as water, heat medium oil, or the like) holds. Specifically, the preheater 73 preheats the excess sludge transported from the reservoir tank 72, using potential heat from smoke wash wastewater discharged from the smoke treatment tower 94, and potential heat of digestion sludge following digestion being performed in the digestion tank 60, for example. More specifically, the preheater 73 preheats the excess sludge transported from the reservoir tank 72 to around 50°C, using heat of no more than 60°C that the smoke wash wastewater and the digestion sludge holds, for example.

That is to say, in the digestion system 500 according to the present embodiment, the excess sludge is preheated at the preheater 73 and thereafter is transported to the heat exchanger 70.

Thus, in the digestion system 500 according to the present embodiment, the necessary amount of high-temperature heat (e.g., heat of around 100°C) used to heat the excess sludge in the heater 70 can be suppressed as compared to a case of not having the preheater 73. Accordingly, in the digestion system 500, costs of fuel necessary for generating high-temperature heat, for example, can be suppressed.

Also, in the digestion system 500 according to the present embodiment, the amount of heat energy necessary for the heat exchanger 70 to impart to the excess sludge can be suppressed. Accordingly, in the digestion system 500, the scale of the heat exchanger 70 (scale of the heat transfer area) can be suppressed.

Also, in the digestion system 500 according to the present embodiment, the range in temperature of the excess sludge that is raised by heating in the heat exchanger 70 can be suppressed. Accordingly, in the digestion system 500, occurrence of scorching of the excess sludge in the heat exchanger 70 can be prevented.

Also, in the digestion system 500 according to the present embodiment, viscosity of the excess sludge can be reduced by preheating in the preheater 73. Accordingly, in the digestion system 500, pressure loss of the excess sludge transported to the heat exchanger 70 can be suppressed, and power of the pump P1 can be suppressed. Further, in the digestion system 500, pressure loss can be suppressed, and accordingly excess sludge can be passed through a heat exchanger that is compact, and heating efficiency of the excess sludge in the heat exchanger can be increased.

Note that the digestion system 500 may supply smoke wash wastewater, digestion sludge, or the like, of which the temperature has been raised by a heat pump (omitted from illustration), to the heat exchanger 70 as a heat medium.

### [Specific Example (1) of Preheater 73]

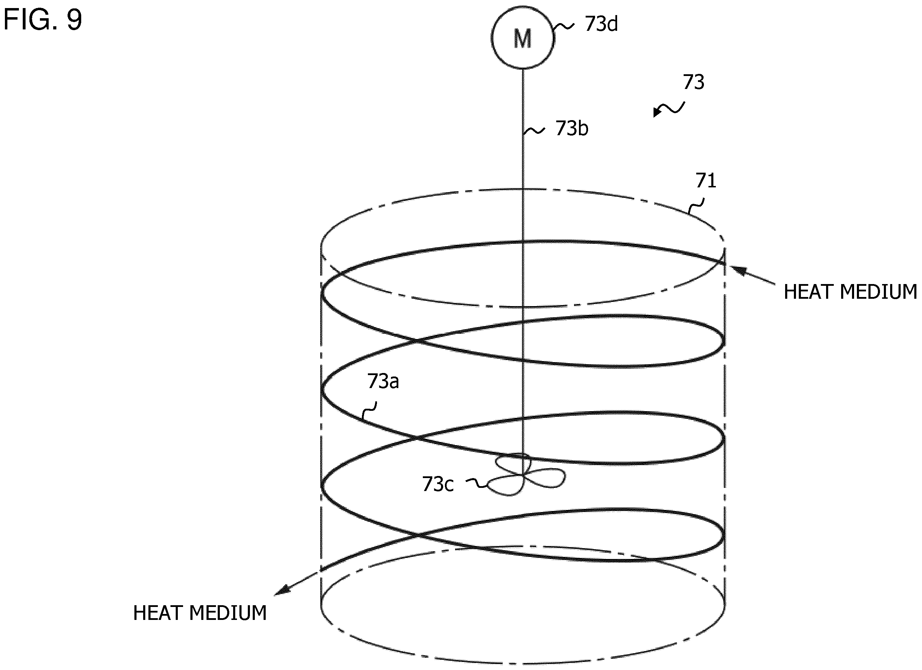

Next, specific examples of the preheater 73 will be described. Fig. 9 to Fig. 12 are perspective diagrams for describing the configuration of the reservoir tank 71 and the preheater 73.

As illustrated in Fig. 9, for example, the preheater 73 has, for example, piping 73a of which at least part thereof is provided in the reservoir tank 71 (hereinafter also referred to as third piping 73a). Specifically, the piping 73a is provided with at least part thereof spirally extending along an inner-side wall face of the reservoir tank 71 that has a cylindrical shape, for example, in the reservoir tank 71.

In the digestion system 500, a heat medium is caused to flow inside the piping 73a, for example, thereby heating the excess sludge (omitted from illustration) stored in the reservoir tank 71.

Also, the preheater 73 has, for example, an agitation rod 73b that agitates the excess sludge stored in the reservoir tank 71, and a motor 73d that rotates the agitation rod 73b about its long axis. Further, agitation blades 73c are attached to the agitation rod 73b, for example, for promoting agitation of the excess sludge. Hereinafter, the agitation rod 73b, the agitation blades 73c, and the motor 73d will be collectively referred to as agitation device.

At the time of heating the excess sludge by the heat medium flowing through the piping 73a, for example, the preheater 73 agitates the excess sludge by rotation of the agitation rod 73b by the motor 73d.

Thus, the digestion system 500 can efficiently perform heating of the excess sludge stored in the reservoir tank 71.

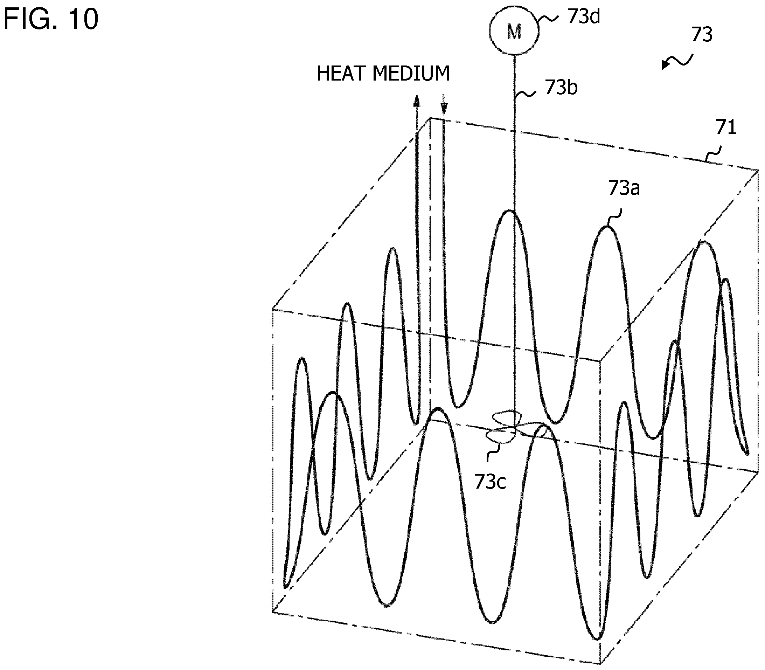

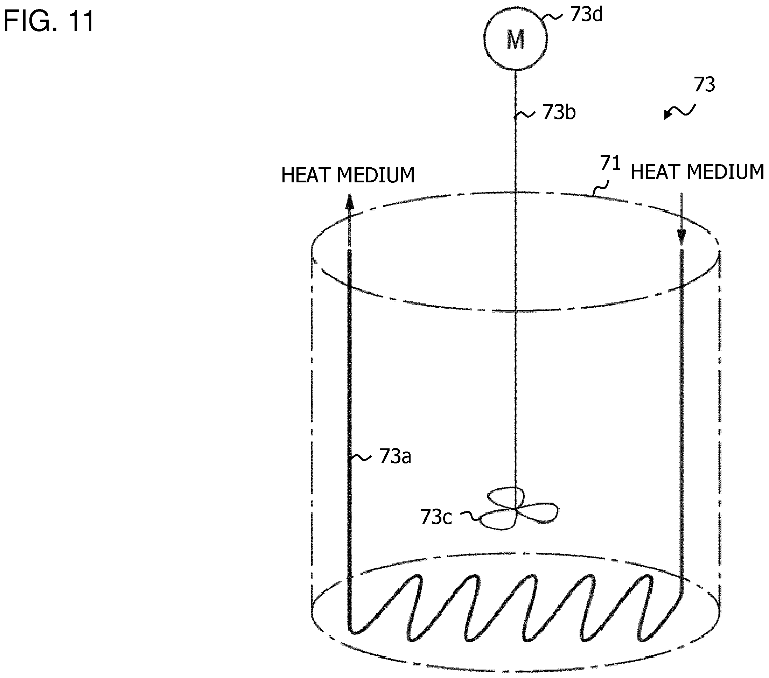

Also, the piping 73a may extend while folding back a plurality of times along the inner-side wall face of the reservoir tank 71, for example, as illustrated in Fig. 10. Further, the piping 73a may extend while folding back a plurality of times along an inner-side bottom face of the reservoir tank 71, for example, as illustrated in Fig. 11.

In this way, providing the spiral piping in the reservoir tank 71 (see Fig. 9), or by providing the piping that extends while folding back (so-called zigzag piping) in the reservoir tank 71 (see Fig. 10 and Fig. 11), the length of the piping 73a provided on an inner side of the reservoir tank 71 can be extended, and heating of the excess sludge stored in the reservoir tank 71 can be efficiently performed in the digestion system 500.

Note that while the reservoir tank 71 has a rectangular shape in the example illustrated in Fig. 10, the reservoir tank 71 may have a shape other than a rectangular shape (e.g., a cylindrical shape). Also, while the reservoir tank 71 has a cylindrical shape in the examples illustrated in Fig. 9 and Fig. 11, the reservoir tank 71 may have a shape other than a cylindrical shape. Further, while the piping 73a follows the inner-side side face of the reservoir tank 71 in the example illustrated in Fig. 10 and the piping 73a follows the inner-side bottom face of the reservoir tank 71 in the example illustrated in Fig. 11, the piping 73a may follow each of the inner-side side face and the inner-side bottom face of the reservoir tank 71, for example.

As described in Fig. 9 to Fig. 11, effective convection heat transfer can be realized in the digestion system 500 by agitating the excess sludge. Also, adhesion of the excess sludge to the piping 73a can be suppressed in the digestion system 500 by agitating the excess sludge. Note that the excess sludge may flow in from a bottom side of the reservoir tank 71 and flow out from an upper side (ceiling side) thereof. Conversely, the excess sludge may flow in from the upper side of the reservoir tank 71 and flow out from the bottom side.

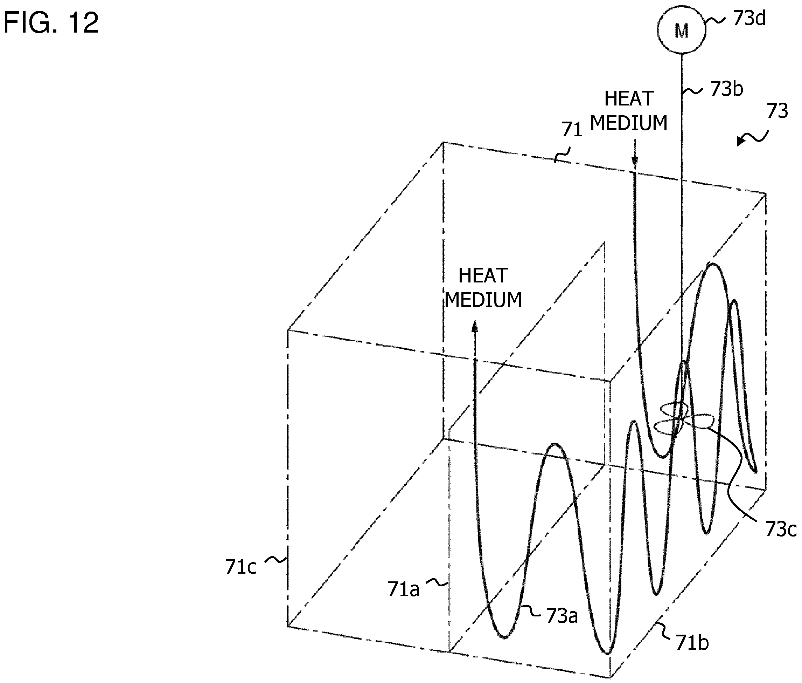

Also, as illustrated in Fig. 12, the reservoir tank 71 may have a partition plate 71a that sections the interior of the reservoir tank 71 into two tanks (hereinafter also referred to as first tank 71b and second tank 71c), for example. In the example illustrated in Fig. 12, the first tank 71b and the second tank 71c communicate upward from the partition plate 71a, for example.

The piping 73a may be provided along an inner-side wall face (inner-side bottom face) of the first tank 71b, for example, with heating of the excess sludge being performed in the first tank 71b. That is to say, in the digestion system 500, the size of the tank in which heating of the excess sludge is performed may be made to be smaller as compared to the case described in Fig. 10, for example.

The excess sludge flows in from a bottom side or an upper side of the first tank 71b. When the height of the excess sludge flowing into the first tank 71b exceeds the partition plate 71a, the excess sludge flows over the partition plate 71a, and flows into the second tank 71c. The excess sludge flowing into the second tank 71c may flow out from a bottom side of the second tank 71c, or may flow out from an upper side of the second tank 71c (at a position lower than the height of the partition plate 71a).

Thus, in the example illustrated in Fig. 12, the interior of the reservoir tank 71 is divided into two tanks and the capacity of the first tank 71b to which heat is supplied to the excess sludge (so-called heat exchange tank) is reduced, thereby reducing the amount of excess sludge that is the object of agitation, so as to improve agitation efficiency. Effective convection heat transfer is realized by improved agitation efficiency. Note that in the example illustrated in Fig. 12, the overall capacity of the reservoir tank 71 is unchanged, and according can maintain functions of a buffer tank for temporarily pooling excess sludge.

### [Specific Example (2) of Preheater 73]

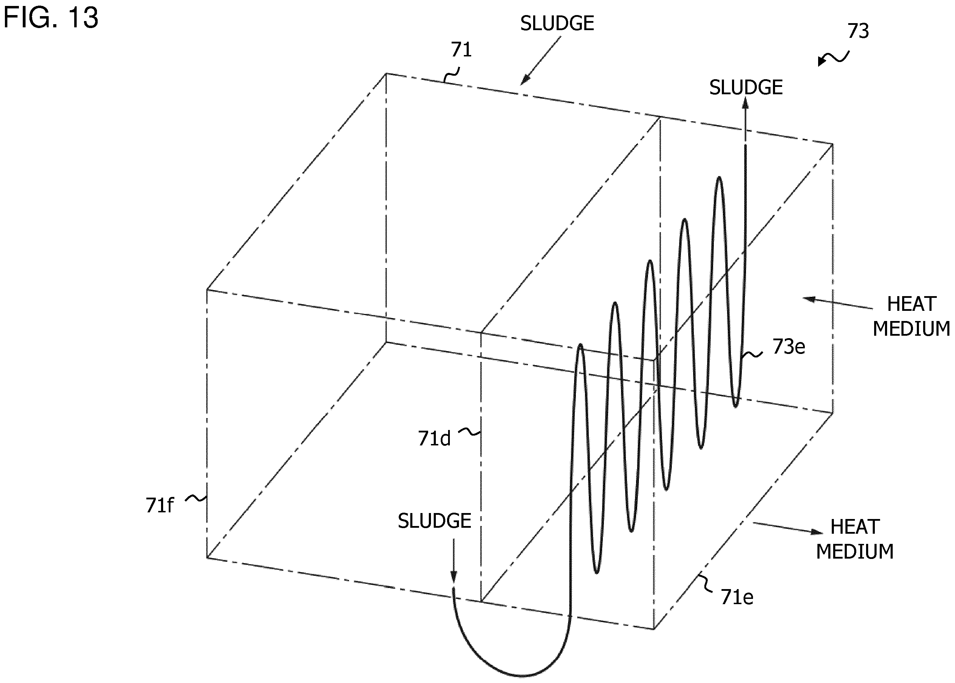

Next, another specific example of the preheater 73 will be described. Efficient convection heat transfer is realized in Fig. 9 to Fig. 12 by using the agitation device. Conversely, an example of the reservoir tank 71 that realizes efficient convection heat transfer without using the agitation device will be described with reference to Fig. 13.

Fig. 13 is a perspective diagram for describing the configuration of the reservoir tank 71 and the preheater 73.

As illustrated in Fig. 13, for example, the reservoir tank 71 has a partition plate 71d that completely sections the interior space of the reservoir tank 71 into two tanks (hereinafter also referred to as third tank 71e and fourth tank 71f).

Also, the preheater 73 has piping 73e (hereinafter also referred to as fourth piping 73e) of which at least part is provided in the third tank 71e (hereafter, also referred to as fluid reservoir tank 71e). As illustrated in Fig. 13, the piping 73e is provided so as to pass through inside of the third tank 71e, for example. Specifically, the piping 73e is provided in the third tank 71e, at a position not following an inner-side side face or an inner-side bottom face of the third tank 71e, for example. The fourth piping 73e has a bent structure.

Following excess sludge being stored in the fourth tank 71f, the preheater 73 then, for example, causes a heat medium (e.g., a fluid such as hot water or the like) to flow into the third tank 71e, and further causes the excess sludge stored in the fourth tank 71f to flow into the piping 73e, thereby heating the excess sludge flowing through the piping 73e.

That is to say, in the example illustrated in Fig. 13, the excess sludge flows through the piping 73e that has the bent structure, and accordingly the heating time of the excess sludge can be extended. Also, efficient convection heat transfer can be realized without the agitation device, by the excess sludge flowing through the piping 73e that has the bent structure. Also, doing away with the agitation device enables reduction in power energy for the agitation device. Further, supplying the heat medium (fluid) such as hot water or the like to the third tank 71e enables the thermal distribution in the heat medium to be made uniform, and the temperature of the excess sludge to be uniformly raised.

Note that in the example illustrated in Fig. 13, the heat medium may flow in from a bottom side of the third tank 71e and flow out from an upper side. Conversely, the heat medium may flow in from the upper side of the third tank 71e and flow out from the bottom side. Also, while an inlet end portion of the piping 73e for excess sludge is provided on a bottom side of the fourth tank 71f, the inlet end portion thereof may be provided on an upper side of the fourth tank 71f. Also, an outlet end portion of the piping 73e for the excess sludge may be provided on the bottom side of the third tank 71e. Further, the excess sludge may flow in from the upper side of the fourth tank 71f or from the bottom side of the fourth tank 71f.

Also, various methods for raising the temperature of the heat medium supplied to the heat exchanger 70 and the preheater 73 can be employed. For example, a heat pump may be separately provided to raise the temperature of the heat medium supplied to the heat exchanger 70 and the preheater 73, and raise the temperature of the heat medium by this heat pump. In this case, electric power generated by power generation by the aforementioned electric power generating system may be supplied to the heat pump, and the heat pump may operate under this electric power and rase the temperature of the head medium.

Also, the digestion system 500 may have, for example, at least one of the control device 80 described in the second embodiment, the control device 80 described in the third embodiment, and the control device 80 described in the fourth embodiment.

### [Digestion System 600 According to Sixth Embodiment]

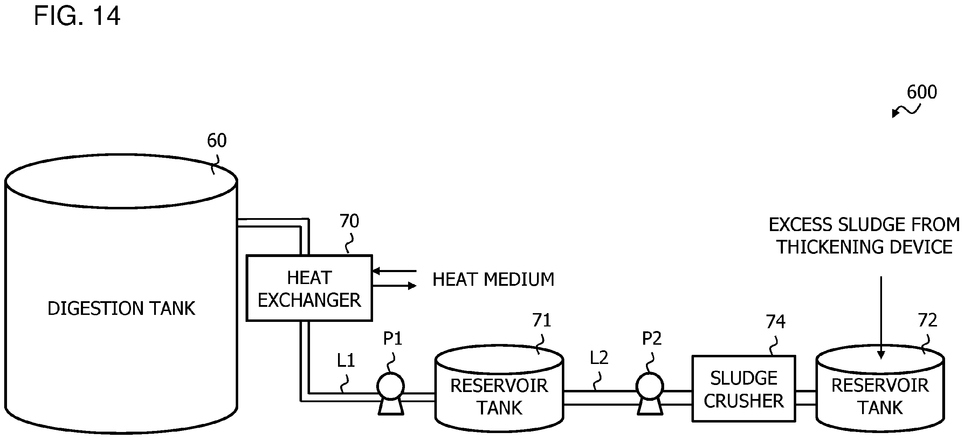

Next, a digestion system 600 according to a sixth embodiment will be described. Fig. 14 is a diagram for describing a configuration of the digestion system 600 according to the sixth embodiment.

The digestion system 600 according to the present embodiment has, for example, in addition to the configurations that the digestion system 100 according to the first embodiment has, a sludge crusher 74 for crushing excess sludge being transported from the reservoir tank 72 toward the reservoir tank 71 (excess sludge being transported through the piping L2), as illustrated in Fig. 14.

The sludge crusher 74 is installed between the pump P2 and the reservoir tank 72, for example. The sludge crusher 74 has functions to crush excess sludge in clump form, and for example crushes excess sludge in clump form by a plurality of blades. The pump P2 then transports the excess sludge crushed by the sludge crusher 74 to the reservoir tank 71.

Accordingly, excess sludge in clump form can be prevented from being transported to the heat exchanger 70 as it is in the digestion system 600 according to the present embodiment. Accordingly, fluidity of the excess sludge in the heat exchanger 70 can be improved in the digestion system 600, and heating of the excess sludge by the heat exchanger 70 can be efficiently performed.

Note that while description has been made in the example illustrated in Fig. 14 where the sludge crusher 74 is installed between the reservoir tank 71 and the reservoir tank 72 (e.g., between the pump P2 and the reservoir tank 72), the sludge crusher 74 may be installed between the digestion tank 60 and the reservoir tank 71 (e.g., between the pump P1 and the reservoir tank 71). The sludge crusher 74 may crush the excess sludge being transported from the reservoir tank 72 toward the digestion tank 60 (excess sludge being transported through the piping L1). In this case as well, excess sludge in clump form can be prevented from being transported to the heat exchanger 70 in the digestion system 600 according to the present embodiment. Accordingly, fluidity of the excess sludge in the heat exchanger 70 can be improved in the digestion system 600, and heating of the excess sludge by the heat exchanger 70 can be efficiently performed. Note that the sludge crusher 74 installed between the digestion tank 60 and the reservoir tank 71 is also referred to as first sludge crusher 74, and the sludge crusher 74 installed between the reservoir tank 71 and the reservoir tank 72 is also referred to as second sludge crusher 74.

Further, the sludge crusher 74 may be installed both between the digestion tank 60 and the reservoir tank 71, and between the reservoir tank 71 and the reservoir tank 72, for example.

Note that the digestion system 600 may have, for example, at least one of the control device 80 described in the second embodiment, the control device 80 described in the third embodiment, and the control device 80 described in the fourth embodiment.

The digestion systems 100, 200, 300, 400, 500, and 600 according to the first embodiment to the sixth embodiment described above may be used with the configurations of the digestion systems being combined. Specifically, for example, the preheater 73 that the digestion system 500 according to the fifth embodiment has may be used in digestion systems according to other embodiments. Also, for example, the sludge crusher 74 that the digestion system 600 according to the sixth embodiment has may be used in digestion systems according to other embodiments.

### REFERENCE SIGNS LIST

1: SLUDGE TREATMENT FACILITY
10: PRIMARY SEDIMENTATION BASIN
20: WASTEWATER TREATMENT DEVICE, 30: FINAL SEDIMENTATION BASIN
40: THICKENER, 50: THICKENING DEVICE
60: DIGESTION TANK, 70: HEATER
71: RESERVOIR TANK, 71a: PARTITION PLATE
71b: FIRST TANK, 71c: SECOND TANK
71d: PARTITION PLATE, 71e: THIRD TANK
71f: FOURTH TANK, 72: RESERVOIR TANK
73: PREHEATER, 73a: PIPING
73b: AGITATION ROD, 73c: AGITATION BLADES
73d: MOTOR, 73e: MOTOR
74: SLUDGE CRUSHER, 80: CONTROL DEVICE
90: INCINERATION SYSTEM, 91: INCINERATOR
92: WHITE SMOKE PREVENTION AIR PREHEATER, 93: SCRUBBER
94: SMOKE TREATMENT TOWER, 95: SMOKESTACK
96: HOT WATER GENERATOR, 100: DIGESTION SYSTEM
200: DIGESTION SYSTEM, 300: DIGESTION SYSTEM
400: DIGESTION SYSTEM, 500: DIGESTION SYSTEM
L1: PIPING, L2: PIPING
L11: PIPING, L12: PIPING
P1: PUMP, P2: PUMP
P11: PUMP, P12: PUMP
M1: LEVEL GAUGE, M2: LEVEL GAUGE
T: THERMOMETER

## Claims

1. A digestion system comprising:
a digestion tank that digests organic matter in excess sludge by anaerobic bacteria;
a first piping that supplies the excess sludge to the digestion tank;
a second piping that has a larger pipe diameter than a pipe diameter of the first piping;
a first reservoir tank that communicates with each of the first piping and the second piping, and that stores the excess sludge transported by the second piping;
a transporting unit that transports the excess sludge stored in the first reservoir tank to the digestion tank via the first piping, continuously for a predetermined period; and
a heater that heats the excess sludge in the first piping by a fluid.

2. The digestion system according to claim 1, further comprising:
a second reservoir tank that communicates with the second piping and that stores the excess sludge to be transported to the first reservoir tank, wherein
the transporting unit transports the excess sludge stored in the second reservoir tank to the first reservoir tank via the second piping, intermittently for a predetermined period.

3. The digestion system according to claim 1, further comprising:
a control device that controls an amount of the excess sludge that the transporting unit continuously transports to the digestion tank, in accordance with an amount of the excess sludge stored in the first reservoir tank.

4. The digestion system according to claim 2, further comprising:
a control device that controls an amount of the excess sludge that the transporting unit intermittently transports from the second reservoir tank to the first reservoir tank, in accordance with an amount of the excess sludge stored in the second reservoir tank.

5. The digestion system according to claim 2, further comprising:
a control device that controls an amount of the excess sludge that the transporting unit intermittently transports from the second reservoir tank to the first reservoir tank, in accordance with an amount of the excess sludge stored in the first reservoir tank.

6. The digestion system according to claim 1, further comprising:
a control device that controls an amount of the fluid supplied to the heater, in accordance with at least one of an amount of the excess sludge that the transporting unit transports to the digestion tank, a temperature of the excess sludge prior to heating by the heater, and a temperature of the excess sludge following heating by the heater.

7. The digestion system according to claim 1, wherein
the fluid is a fluid of which a temperature has been raised by at least one of potential heat of exhaust gas discharged from an incinerator that incinerates the excess sludge that has been digested in the digestion tank, and potential heat of exhaust gas discharged from an electric power generating system that generates electricity using digestion gas generated by digestion of the excess sludge in the digestion tank.

8. The digestion system according to claim 1, wherein
the first reservoir tank has a preheater that heats the excess sludge in the first reservoir tank by a fluid.

9. The digestion system according to claim 8, wherein
the preheater has a third piping of which at least a part extends along at least one of an inner-side wall face and an inner-side bottom face of the first reservoir tank, and inside which the fluid flows.

10. The digestion system according to claim 8, wherein
the preheater has a fluid reservoir tank that pools the fluid, and
a fourth piping of which at least part passes through the fluid reservoir tank, and inside which the excess sludge flows.

11. The digestion system according to claim 1, wherein
the first reservoir tank has an agitation device that agitates the excess sludge in the first reservoir tank.

12. The digestion system according to claim 1, further comprising:
a first sludge crusher that crushes the excess sludge being transported from the first reservoir tank to the digestion tank via the first piping.

13. The digestion system according to claim 2, further comprising:
a second sludge crusher that crushes the excess sludge being transported from the second reservoir tank to the first reservoir tank via the second piping.

14. A heating control method in a digestion system including a digestion tank that digests organic matter in excess sludge by anaerobic bacteria, a first piping that supplies the excess sludge to the digestion tank, a second piping that has a larger pipe diameter than a pipe diameter of the first piping, a first reservoir tank that communicates with each of the first piping and the second piping, and that stores the excess sludge transported by the second piping, a transporting unit that transports the excess sludge stored in the first reservoir tank to the digestion tank via the first piping, continuously for a predetermined period, and a heater that heats the excess sludge in the first piping by a fluid, the method comprising:
controlling an amount of the excess sludge that the transporting unit transports to the digestion tank, in accordance with an amount of the excess sludge stored in the first reservoir tank.
